Europäisches Patentamt

European Patent Office

Office européen des brevets

(19)

(11) Veröffentlichungsnummer: **0 047 365**
**B1**

(12) **EUROPÄISCHE PATENTSCHRIFT**

(45) Veröffentlichungstag der Patentschrift:
**27.12.84**

(21) Anmeldenummer: **81105046.7**

(22) Anmeldetag: **30.06.81**

(51) Int. Cl.³: **E 04 D 11/00,** A 01 G 9/00

(54) **Wurzelverankernde Flachdach-Bodeneinlage.**

(30) Priorität: **28.11.80 DE 3044809**
**30.06.80 DE 3024672**

(43) Veröffentlichungstag der Anmeldung:
**17.03.82 Patentblatt 82/11**

(45) Bekanntmachung des Hinweises auf die Patenterteilung:
**27.12.84 Patentblatt 84/52**

(84) Benannte Vertragsstaaten:
**AT BE CH DE FR GB IT LI LU NL SE**

(56) Entgegenhaltungen:
**DE - A - 2 248 911**
**DE - A - 2 321 362**
**DE - A - 2 335 685**

(73) Patentinhaber: **Drefahl, Jens, Amselweg 18a,**
**D-6458 Rodenbach 2 (DE)**

(72) Erfinder: **Drefahl, Jens, Amselweg 18a,**
**D-6458 Rodenbach 2 (DE)**

(74) Vertreter: **Schumacher, Bernd, Dipl.-Ing., Am**
**Schwaberg 13, D-6450 Hanau 6 (DE)**

## Beschreibung

Die Erfindung betrifft eine wurzelverankernde Flachdach-Bodeneinlage für begrünbare Pflanzböden von Flachdächern.

Derartige Bodeneinlagen dienen zur Standstabilisierung von mittelhohen bis hohen Pflanzen in relativ lockeren Pflanzböden mit vergleichsweise geringer Dicke. Zur Verbesserung der Wurzelverankerung in dem lockeren und leichten Pflanzboden und damit zur Standsicherung von Pflanzen in windgefährdeten Lagen ist es bekannt, in die Bodenschicht eine flächige Wirkgewebematte mit einzelnen Maschen einzulegen, durch die die Wurzeln hindurchwachsen können. Eine solche Wirkgewebematte hat den Nachteil, dass sie eine nur sehr begrenzte Wurzelverankerung in einer Bodenschichtebene und eine in vielen Fällen unzureichende Pflanzen-Standsicherung gewährleistet. Wenn die Wirkgewebematte gemäss Empfehlung tief in die Bodenschicht eingearbeitet wird, erfolgt eine Wurzelverankerung erst nach einem ausreichend fortgeschrittenen Pflanzenwachstum. Da die oberflächennahen Wurzelbereiche überhaupt nicht verankert sind, kann insbesondere bei grösseren Windlasten und/oder Dachneigungen keine ausreichende Standsicherung gewährleistet werden. Wenn andererseits die Wirkgewebematte in der Bodenschicht oberflächennah angeordnet wird, um beispielsweise eine frühzeitigere Wurzelverankerung zu erzielen, kann die Wirkgewebematte bei grösseren Belastungen mit den Pflanzenwurzeln aus der Bodenschicht gezogen werden.

Die DE-A 2 321 362 beschreibt eine Erosionsschutzmatte, die aus einem Filtervlies und einer lockeren, oberseitigen, bodenaufnehmenden Wirrfaserschicht besteht. Diese Matte dient nicht für Dachzwecke und wird an verteilten Stellen am Untergrund befestigt. Nach einiger Zeit verankern die in den Boden einwachsenden Wurzeln die Matte grossflächig mit dem Untergrund. Diese Erosionsschutzmatte ist nicht für Dachzwecke geeignet, da dort eine Verankerung mit dem glatten Dachunterbau nicht möglich ist und sich keine lagestabile Wurzelverankerung erzielen lässt. Ähnliche Verhältnisse ergeben sich auch für die aus der DE-A 2 248 911 entnehmbare Sportplatz-Dränagematte, die für eine grossflächige Bodenentwässerung dient und ebenfalls nicht für den glatten Dachbereich geeignet ist, sondern stets auf einen rauhen Bodenuntergrund aufgelegt wird. Unter einer oberseitigen Grobfaserschicht befinden sich eine erste Filterschicht, eine Dränageschicht und eine zweite Filterschicht, die auf dem rauhen Bodenuntergrund zur Auflage kommt und auch hierdurch eine wirksame Bodenverankerung erhält. Die Dränageschicht ist ein eigenstabiles, verdichtetes Gebilde, das durch seine physikalischen Festigkeitseigenschaften bereichsweisen Belastungen standhalten muss. Die einzelnen Schichten können lose übereinander angeordnet oder miteinander verbunden sein. Diese Dränagematte eignet sich nicht für den glatten Dachbereich, da dort keine grossflächige Verankerung mit dem Untergrund vorliegt und da sich insgesamt keine hochwirksame standstabilisierende Wurzelverankerung erzielen lässt.

Die parallele EP-A 0 045 376 desselben Anmelders (mit derselben Priorität und den gleichen benannten Vertragsstaaten), die sich im Zusammenhang mit einigen Merkmalen, insbesondere der Unteransprüche, mit der vorliegenden Anmeldung überschneidet, befasst sich ausschliesslich mt einer für Schrägdächer dienenden Dachabdeckung mit einer firstseitigen Abtragung der auftretenden Schubkräfte.

Die Aufgabe der vorliegenden Erfindung besteht in der Schaffung einer wurzelverankernden Bodeneinlage der genannten Art, die sich unter Vermeidung der geschilderten Nachteile für einen lagestabilisierenden Einsatz bei Flachdächern eignet und die bei einfachem sowie preiswertem Aufbau und leichter Handhabung eine wesentlich wirksamere Standsicherung von lagestabilen Dachbegrünungen gewährleistet.

Zur Lösung der gestellten Aufgabe zeichnet sich eine wurzelverankernde Bodeneinlage der im Oberbegriff genannten Art erfindungsgemäss aus durch eine erste dreidimensionale oberseitige Krallschicht aus miteinander raumgitterartig verketteten Fasern oder Strängen mit einer für einen räumlich verteilten, standstabilisierenden Wurzelhalterungseingriff ausreichend grossen Eigenstabilität sowie mit einem zur Aufnahme von Pflanzböden und Pflanzenwurzeln genügend grossen Hohlraumvolumen zwischen den Fasern oder Strängen, ferner durch eine als pflanzbodentragende Bodenunterlage ausgebildete, wasserdurchlässige, zugfeste Filtermatte, auf der die oberseitige Krallschicht zur pflanzenhaltenden Belastungsübertragung zumindest an verteilten Bereichen ausreichend kraftschlüssig befestigt ist, und durch eine zu der oberseitigen Krallschicht im wesentlichen übereinstimmend aufgebaute, als Dränage wasserleitende zweite Krallschicht mit grossem Hohlraumvolumen und ausreichender Gewichtsbelastbarkeit sowie Dikke an der Unterseite der Filtermatte.

Eine solche Bodeneinlage ist wegen der an sich bekannten dreidimensionalen Ausdehnung der oberseitigen Krallschicht ein höchst wirkungsvolles Mittel für eine standsichernde Verankerung im wesentlichen aller oberflächennahen und -fernen Wurzelbereiche einer Dachbegrünung. Im Unterschied zu einer Wurzelverankerung in nur einer Ebene der Bodenschicht vermag die räumlich verteilte Wurzelverankerung wesentlich grössere Windbelastungen oder dergleichen zu kompensieren und gleichmässig aufzufangen sowie abzuleiten. Dieses gilt insbesondere im Zusammenhang mit der den Pflanzboden tragenden, oberflächenfern angeordneten zugfesten Filtermatte. Die aus Krallschichten einerseits und Filtermatte andererseits bestehende Einheit der Bodeneinlage ist auch bei relativ extremen Windbelastungen verankerungs- sowie lagestabil, da ein Abheben dieser Einheit ein Abheben der gesamten Bodenschicht oberhalb der Filtermatte voraussetzen würde. Ausserdem gewährleistet die kraftschlüssige Verbindung zwischen der bodenaufnehmenden Krallschicht und der Filtermatte eine einwandfreie Belastungsübertragung von der Krallschicht auf die Filtermatte, die überdies bei extremen Anwendungsfällen an tragenden Gebäudeteilen verankert sein kann. Wegen des grossen Hohlraumvolumens der Krallschicht wird der Pflanzenwuchs in keiner Weise behindert. Andererseits ermöglichen die verketteten, räumlich verteilten Fasern oder Stränge der Krallschicht ein wirksames Verankern aller oberflächennahen sowie -fernen Wurzelbereiche. Die Filtermatte, die vielfältig aufgebaut sein und beispielsweise aus einem zugfest armierten Filtervlies bestehen kann, gewährleistet eine hochwirksame Filterung von nach unten in die von der unterseitigen Krallschicht gebildete hohlraumreiche Dränage abfliessendem Überschusswasser, um eine schädliche Überfeuchtung der Bodenschicht zu vermeiden. Die hohlraumreiche Krallschicht der Dränage kann im Vergleich zu herkömmlichen Dränagen aus Sickerplatten, Kies oder dergleichen bei gleichem Wasserleitvermögen wesentlich dünner ausgebildet werden. Dieses ermöglicht eine vereinfachende, kostensenkende Reduzierung der Dicke und damit des Gewichts der Dachabdeckung. Die Trittfestigkeit der Pflanzboden-Bodeneinlage-Einheit wird auch nicht durch eine grössere Dicke der hohlraumreichen unteren Krallschicht beeinträchtigt.

Zum Erzielen einer optimalen Wurzelverankerung ist es bevorzugt, dass die Dicke der wurzelverankernden Krallschicht etwa der Dicke einer aufzubringenden Bodenschicht entspricht. Die Fasern oder Stränge der Krallschicht können sich durch alle Bereiche der Bodenschicht wurzelverankernd erstrecken, da die Krallschicht aufgrund ihres grossen Hohlvolumenanteils den Pflanzenwuchs in keiner Weise beeinträchtigt. Abgesehen von dem Vorteil der Wurzelverankerung wird die Bodenschicht durch die Krallschicht nach Art einer Armierung stabilisiert bzw. verfestigt, ohne jedoch ihren lockeren Gefügeaufbau zu verlieren.

Bei einer zweckmässigen praktischen Ausführungsform besteht die Krallschicht aus Kunststoff-Monofilen. Diese ermöglichen ein kostengünstiges und einfaches Herstellen einer verrottungssicheren Krallschicht.

Die Krallschicht kann aus dreidimensional geflochtenen oder gewebten Fasern oder Strängen bestehen. Statt einer derartig regelmässigen Struktur kann die Krallschicht auch aus unregelmässig dreidimensional verketteten Fasern oder Strängen ausgebildet sein. Wichtig ist dabei, dass die Fasern oder Stränge bei ausreichend grossem Hohlraumvolumenanteil räumlich verteilt angeordnet sind und wegen der Verkettung eine ausreichend grosse Belastungsübertragung auf die Haltematte gewährleisten.

Die Bodeneinlage lässt sich besonders einfach sowie preiswert herstellen, wenn die Fasern oder Stränge der Krallschicht an verteilten Bereichen mit der Filtermatte verklebt oder verschweisst sind. Dadurch können die Einzelbestandteile der Bodeneinlage, das heisst die Krallschicht einerseits sowie die Filtermatte andererseits, voneinander getrennt hergestellt und anschliessend durch punktuelles Verbinden kraftschlüssig vereinigt werden. Stattdessen ist es auch möglich, auf einer Filtermatte einzelne, voneinander völlig unabhängige Krallschichtbestandteile nacheinander oder gleichzeitig festzulegen.

In weiterer Ausgestaltung kann eine feuchtigkeitsspeichernde zugfeste Filtermatte verwendet werden. Diese verhindert ein zu schnelles Austrocknen der Bodenschicht und begünstigt den Pflanzenwuchs insbesondere in trockenen Jahreszeiten.

Für besonders extreme Belastungsfälle kann es vorteilhaft sein, die zugfeste Filtermatte mit einer einspannbaren Randeinfassung zu versehen. Dieses ist vor allem dann der Fall, wenn eine Standsicherung von höheren Pflanzen in besonders windgefährdeten Gegenden und bei relativ dünnen Bodenschichten angestrebt wird.

Bei einer praktischen Ausführungsform sind über die Oberfläche der Filtermatte verteilte Krallschicht-Büschel aus verketteten Fasern oder Strängen mit der Filtermatte verbunden. Hierbei können die Fasern oder Stränge der einzelnen Krallschicht-Büschel mit den Fasern oder Strängen derselben und/oder anderer Krallschicht-Büschel verkettet sein. Eine solche Büschelausbildung eignet sich vor allem im Zusammenhang mit einer nur bereichsweisen kraftschlüssigen Festlegung der Krallschicht an der Filtermatte und kann zu herstellungstechnischen sowie kostenmässigen Vorteilen führen.

Die vorliegende Erfindung beinhaltet ferner die Anwendung einer derartigen Filtervliesmatte mit beidseitig befestigten räumlichen Wirrgelegen aus verketteten Kunststoff-Monofilen als oberseitig pflanzbodenaufnehmende sowie wurzelverankernde und unterseitig dränageartig wasserleitende Dachabdeckung von Flachdächern. Derartige Matten wurden bereits im Zuammenhang mit einer bodenverankernden Böschungssowie Deichbefestigung und einer Bodenabrutschsicherung vorgeschlagen. Es hat sich gezeigt, dass diese Matte insbesondere in Verbindung mit weiteren Massnahmen äusserst vorteilhaft zur Wurzelverankerung sowie Standsicherung von mittelhohen bis hohen Dachbegrünungen auf Flachdächern eingesetzt werden können, obwohl dort keine grossflächige mechanische Verankerung mit dem glatten Dachunterbau vorliegt.

Die Erfindung wird nachfolgend an einem zeichnerisch dargestellten Ausführungsbeispiel näher erläutert.

Es zeigen:

Figur 1 in einem schematischen Querschnitt einen beispielhaften Dachaufbau mit einer erfindungsgemässen Bodeneinlage, die oberseitige und unterseitige Krallschichten aufweist, und

Figur 2 einen Teil der Bodeneinlage aus Figur 1 in Draufsicht.

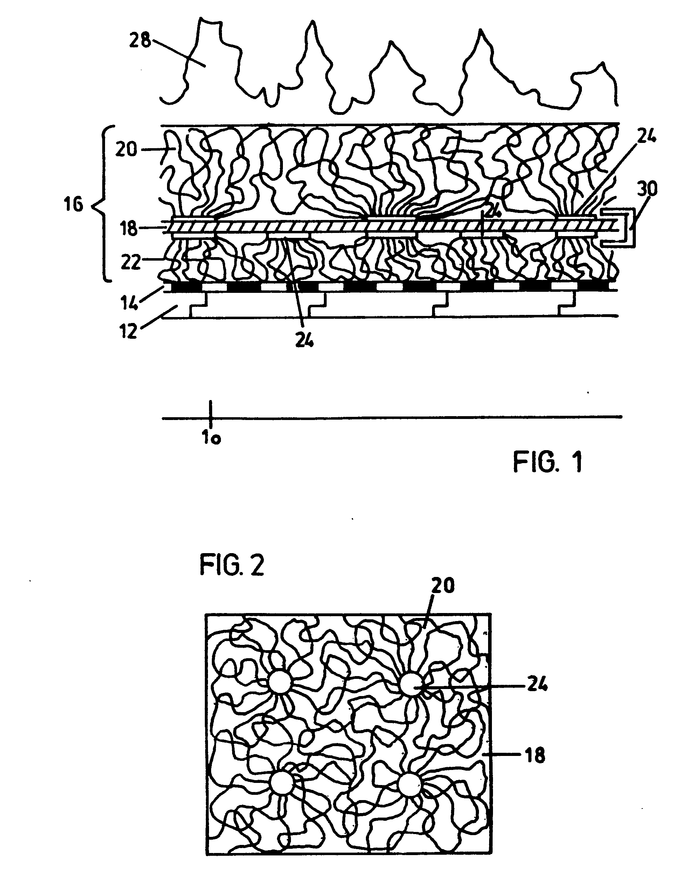

Gemäss Figur 1 befindet sich über einer tragenden Dachkonstruktion 10, die bereits eine ausreichende Wärmedämmung beinhalten kann, im vorliegenden Fall eine Holzschalung 12 mit einer darauf angeordneten, wasserundurchlässigen und wurzelfesten Dachhaut 14. Auf der letzteren stützt sich eine erfindungsgemässe Bodeneinlage 16 ab, die im vorliegenden Fall aus einer zugfesten, filternden und vorzugsweise auch wasserspeichernden Filtermatte 18 mit einer oberseitigen, wurzelverankernden Krallschicht 20 und einer unterseitigen, als Dränage wirksamen Krallschicht 22 besteht. Beide Krallschichten 20, 22 bestehen gemäss Figur 1 aus einzelnen Büscheln von miteinander räumlich verketteten Fasern oder Strängen. Die einzelnen Büschel sind in Bereichen 24 kraftschlüssig mit der Filtermatte 18 verklebt, verschweisst oder in anderer Weise verbunden.

Die Dicke der oberseitigen, wurzelverankernden Krallschicht 20 entspricht im vorliegenden Fall der Dicke einer aufzubringenden Bodenschicht, die vollständig in den Hohlraumanteil der dreidimensionalen Krallschicht 20 integriert ist und auf der Filtermatte 18 aufliegt. Andeutungsweise dargestellte Pflanzen 28 greifen mit ihren nicht dargestellten Wurzeln in die Bodenschicht ein, um dort in allen Bereichen mit den Fasern oder Strängen der Krallschicht 20 in einen hochwirksamen Wurzelverankerungseingriff zu treten. Infolge des grossen Hohlraumanteils der Krallschicht 20 werden die Pflanzen 28 in ihrem Wachstum in keiner Weise beeinträchtigt. Vielmehr erhalten die Pflanzen 28 durch die Krallschicht 20 in Verbindung mit der zugfesten Filtermatte 18 selbst bei einer relativ dünnen Bodenschicht und starken Windlasten einen sicheren, dreidimensional verteilten Halt. Ein belastungsbedingtes Ausbrechen der Wurzelverankerung wird verhindert, da dieses ein Anheben der gesamten Bodenschicht voraussetzen würde.

Unterhalb der filternden und vorzugsweise auch feuchtigkeitsspeichernden zugfesten Filtermatte 18 bildet die Krallschicht 22 eine hochwirksame Dränage, die wegen des grossen Hohlraumanteils der ebenfalls raumgitterartig verketteten, büschelartig zusammengefassten Fasern oder Stränge im Vergleich zu einer herkömmlichen Dränage aus Sickerplatten, Kies oder dergleichen bei gleichem Wasserleitvermögen wesentlich dünner ausgebildet sein kann. Während die Krallschicht 22 eine minimale Dicke von beispielsweise 1 cm haben kann, kann die wurzelverankernde Krallschicht 20 je nach Dicke der Bodenschicht beispielsweise eine Dicke von etwa 2 bis etwa 20 cm haben.

Aus Figur 2 ist ersichtlich, dass die aus unverrottbaren Kunststoff-Monofilen bestehenden Fasern oder Stränge der einzelnen Büschel der Krallschicht 20 (wie auch der Krallschicht 22) an oberflächenverteilten Bereichen 24 mit der Filtermatte 18 kraftschlüssig verbunden, wie verklebt oder verschweisst, sind. Die Fasern oder Stränge der einzelnen Krallschicht-Büschel können miteinander oder auch mit anderen Büscheln verkettet, wie verschlungen oder verklebt, sein, um ein möglichst gut zusammenhängendes Raumgebilde zu erhalten. Die auf dieses einwirkenden Belastungen können über die Bereiche 24 wirksam auf die Filtermatte 18 übertragen werden, die gemäss Figur 1 beispielsweise eine als U-Profil ausgebildete Randeinfassung 30 zur Verankerung an festen Gebäudebestandteilen oder dergleichen aufweisen kann. Dadurch ist es möglich, auch grosse Windbelastungen aufzufangen.

Die in den Figuren 1 und 2 dargestellte Ausführungsform ist lediglich beispielhaft und kann in vielfältiger Weise abgewandelt werden. Beispielsweise können die Krallschicht 20 und/oder die Krallschicht 22 grossflächig, statt punktuell, mit der Filtermatte verbunden sein. Die einzelnen Krallschichten können statt des dargestellten unregelmässigen Raumgefüges auch einen regelmässigen Raumgitteraufbau haben und beispielsweise ein räumliches Geflecht oder Gewebe darstellen. Zwischen der Dachhaut 14 und der Krallschicht 22 können sich beispielsweise eine Gleitschicht in Form eines Trennvlieses und im Bedarfsfall auch eine Wärmedämmung befinden. All diesen und weiteren Ausführungsvarianten ist jedoch gemeinsam, dass sich die Bodenschicht vollständig oder zumindest teilweise zusammen mit den Wurzeln der Pflanzen in der wurzelverankernden oberseitigen Krallschicht befindet und auf der Filtermatte abstützt. Dabei ist nicht ausgeschlossen, dass sich auch unterhalb der Filtermatte eine weitere Bodenschicht befindet, so dass die Filtermatte in die gesamte Bodenschicht integriert und nicht ausschliesslich unterhalb derselben angeordnet ist. Ferner ist es grundsätzlich möglich, dass die Filtermatte ein Hindurchwachsen von Wurzeln in eine darunter befindliche Dränage oder weitere Bodenschicht zulässt, wobei jedoch die wurzelfeste Dachhaut ein Eindringen der Wurzeln in die tragende Dachkonstruktion sicher vermeidet. Stattdessen kann die Filtermatte auch zusätzlich zumindest weitgehend wurzelfest sein und ein Eindringen der Wurzeln in eine darunter befindliche Dränage im wesentlichen vermeiden. In diesem Fall hat die Wurzelfestigkeit einer darunter befindlichen Dachhaut nur eine zusätzliche Sicherungsfunktion.

**Patentansprüche**

1. Wurzelverankernde Flachdach-Bodeneinlage für begrünbare Pflanzböden von Flachdächern, gekennzeichnet durch eine erste dreidimensionale oberseitige Krallschicht (20) aus miteinander raumgitterartig verketteten Fasern oder Strängen mit einer für einen räumlich verteilten, standstabilisierenden Wurzelhaltungseingriff ausreichend grossen Eigenstabilität sowie mit einem zur Aufnahme von Pflanzböden und Pflanzenwurzeln genügend grossen Hohlraumvolumen zwischen den Fasern oder Strängen, ferner durch eine als pflanzbodentragende Bodenunterlage ausgebildete, wasserdurchlässige, zugfeste Filtermatte (18), auf der die oberseitige Krallschicht (20) zur pflanzenhalternden Belastungsübertragung zumindest an verteilten Bereichen (24) ausreichend kraftschlüssig befestigt ist, und durch eine zu der oberseitigen Krallschicht im wesentlichen übereinstimmend aufgebaute, als Dränage wasserleitende zweite Krallschicht (22) mit grossem Hohlraumvolumen und ausreichender Gewichtsbelastbarkeit sowie Dicke an der Unterseite der Filtermatte.

2. Bodeneinlage nach Anspruch 1, gekennzeichnet durch eine etwa der Dicke einer aufzubringenden Bodenschicht entsprechende Dicke der wurzelverankernden Krallschicht (20).

3. Bodeneinlage nach Anspruch 1 oder 2, gekennzeichnet durch eine aus Kunststoff-Monofilen bestehende Krallschicht (20, 22).

4. Bodeneinlage nach einem oder mehreren der Ansprüche 1 bis 3, gekennzeichnet durch eine Krallschicht aus dreidimensional geflochtenen oder gewebten Fasern oder Strängen.

5. Bodeneinlage nach einem oder mehreren der Ansprüche 1 bis 4, gekennzeichnet durch eine Krallschicht (20, 22) aus unregelmässig dreidimensional verketteten Fasern oder Strängen.

6. Bodeneinlage nach einem oder mehreren der Ansprüche 1 bis 5, dadurch gekennzeichnet dass die Fasern oder Stränge der Krallschicht (20, 22) an verteilten Bereichen (24) mit der Filtermatte (18) verklebt oder verschweisst sind.

7. Bodeneinlage nach einem oder mehreren der Ansprüche 1 bis 6, gekennzeichnet durch eine feuchtigkeitsspeichernde zugfeste Filtermatte (18).

8. Bodeneinlage nach einem oder mehreren der Ansprüche 1 bis 7, gekennzeichnet durch eine einspannbare Randeinfassung (30) der zugfesten Filtermatte (18).

9. Bodeneinlage nach einem oder mehreren der Ansprüche 1 bis 8, gekennzeichnet durch mit der Filtermatte (18) verbundene und über deren Oberfläche verteilte Krallschicht-Büschel aus verketteten Fasern oder Strängen.

10. Bodeneinlage nach Anspruch 9, gekennzeichnet durch eine Verkettung der Fasern oder Stränge der einzelnen Krallschicht-Büschel mit den Fasern oder Strängen derselben und/oder anderer Krallschicht-Büschel.

11. Anwendung einer zugfesten Filtervliesmatte mit beidseitig befestigten räumlichen Wirrgelegen aus verketteten Kunststoff-Monofilen nach einem oder mehreren der Ansprüche 1 bis 10 als oberseitig pflanzbodenaufnehmende sowie wurzelverankernde und unterseitig dränageartig wasserleitende Dachabdeckung von Flachdächern.

**Revendications**

1. Garniture de sol de terrasse pour l'ancrage de racines, destinée à des sols de terrasses plantés, caractérisée par une première couche supérieure d'accrochage (20) formée de fibres ou d'écheveaux interconnectés à la manière d'un réseau spatial ayant une prise d'ancrage des racines, répartie dans l'espace et stabilisant la position, d'une stabilité propre suffisamment grande, et des volumes d'espace vide suffisamment grands entre les fibres ou écheveaux pour recevoir les sols destinés aux plantes et les racines des plantes; par un tapis de filtre (18) résistant à la traction, perméable à l'eau, réalisé sous la forme d'un support de sol pour le sol recevant les plantes, tapis sur lequel la couche supérieure d'accrochage (20) est fixée en des régions réparties (24) suffisamment résistantes aux efforts d'accrochage des plantes; et par une deuxième couche d'accrochage (22) réalisé sous forme d'une couche de drainage conduisant l'eau, construite essentiellement comme la couche d'accrochage supérieure et ayant de grands volumes d'espace vide ainsi qu'une résistance au poids et une épaisseur suffisantes, cette deuxième couche d'accrochage étant disposée sous la face inférieure du tapis de filtre.

2. Garniture de sol selon la revendication 1, caractérisée par une épaisseur de la couche d'accrochage (20) pour l'ancrage des racines correspondant sensiblement à l'épaisseur d'une couche de sol à disposer sur la garniture.

3. Garniture de sol selon l'une des revendications 1 et 2, caractérisée par une couche d'accrochage (20, 22) formée de mono-filaments en matière synthétique.

4. Garniture de sol selon l'une des revendications 1 à 3, caractérisée par une couche d'accrochage en fibres ou écheveaux tressés ou tissés en trois dimensions.

5. Garniture de sol selon l'une des revendications 1 à 4, caractérisée par une couche d'accrochage (20, 22) formée de fibres ou écheveaux interconnectés de manière irrégulière en trois dimensions.

6. Garniture de sol selon l'une des revendications 1 à 5, caractérisée en ce que les fibres ou écheveaux de la couche d'accrochage (20, 22) sont collés ou soudés au tapis de filtre (18) en des régions réparties (24).

7. Garniture de sol selon l'une des revendications 1 à 6, caractérisée par un tapis de filtre (18) résistant à la traction et emmagasinant de l'humidité.

8. Garniture de sol selon l'une des revendications 1 à 7, caractérisée par une bordure d'encastrement (30) du tapis de filtre (18) résistant à la traction.

9. Garniture de sol selon l'une des revendications 1 à 8, caractérisée par des touffes de couche d'accrochage formées de fibres ou écheveaux interconnectés, liées au tapis de filtre (18) et réparties à sa surface.

10. Garniture de sol selon la revendication 9, caractérisée par une interconnexion des fibres ou écheveaux des touffes individuelles de couche d'accrochage avec les fibres ou écheveaux desdites touffes et/ou d'autres touffes de couche d'accrochage.

11. Utilisation d'un tapis de filtre résistant à la traction ayant de chaque côté des agencements spatiaux emmêlés, formés de mono-filaments en matière synthétique interconnectés selon l'une des revendications 1 à 10, en tant que revêtement de terrasse propre à recevoir un sol pour des plantes et à permettre l'ancrage des racines du côté supérieur et à conduire l'eau de drainage du côté inférieur.

## Claims

1. A root-anchoring flat roof soil insert for plantable soils on flat roofs, characterised by a first three dimensional upper clawing layer (20) of fibres or strands which interlink in a space-lattice manner, having a sufficiently great inherent stability for a spacially distributed stationary-stabilising root-support-meshing and having a sufficiently large cavity volume between the fibres or strands to accomodate the soil and roots of plants, and by a water-permeable extension-resistant filter mat (18) which is designed as a soil-carrying soil base on which the upper clawing layer (20) is sufficiently force-lockingly fixed at least at various points (24) for transferring the load for supporting the plants, and by a second clawing layer (22), on the lower side of the filter mat, structured in substantially the same manner as the upper clawing layer, which carries the water as drainage means and has a large cavitiy volume and adequate weight stability under load and thickness.

2. A soil insert according to claim 1, characterised in that the thickness of the root-anchoring clawing layer (20) corresponds to about the thickness of the layer of soil placed thereon.

3. A soil insert according to claims 1 or 2, characterised by a clawing layer (20, 22) of plastics monofilaments.

4. A soil insert according to one or more of claims 1 to 3, characterised by a clawing layer of three-dimensionally plaited or woven fibres or strands.

5. A soil insert according to one or more of claims 1 to 4, characterised by a clawing layer (20, 22) of irregularly three-dimensionally interlinked fibres or strands.

6. A soil insert according to one or more of claims 1 to 5, characterised in that the fibres or strands of the clawing layer (20, 22) are stuck or bonded to the filtering mat (18) at various points (24).

7. A soil insert according to one or more of claims 1 to 6, characterised by a moisture-accumulating, extension-resistant filtering mat (18).

8. A soil insert according to one or more of claims 1 to 7, characterised by a clampable peripheral surround (30) of the extension-resistant filtering mat (18).

9. A soil insert according to one or more of claims 1 to 8, characterised by clusters of interlinked fibres or strands in the clawing layer which are connected to the filtering mat (18) and distributed over the surface thereof.

10. A soil insert according to claim 9, characterised in that the fibres or strands of the individual clusters in the clawing layer interlink with the fibres or strands of the same and/or other clusters in the clawing layer.

11. The use of an extension-resistant filtering web mat with spatial tangled yarns, secured on both sides, of interlinked plastics monofilaments according to one or more of claims 1 to 10 as a roof covering for flat roofs, the upper side of which accommodates the soil base, thereby anchoring the roots, and the lower side of which carries water in a drainage-like manner.

FIG. 1

FIG. 2